(19) Europäisches Patentamt / European Patent Office / Office européen des brevets

(11) **EP 1 655 595 B1**

(12) **EUROPÄISCHE PATENTSCHRIFT**

(45) Veröffentlichungstag und Bekanntmachung des Hinweises auf die Patenterteilung:
**07.10.2009 Patentblatt 2009/41**

(51) Int Cl.:
**G01N 15/06** [(2006.01)]

(21) Anmeldenummer: **04405674.5**

(22) Anmeldetag: **03.11.2004**

(54) **Verfahren und Vorrichtung zur Messung der Anzahlkonzentration und des mittleren Durchmessers von in einem Trägergas suspendierten Partikeln**

Method and device for measuring number concentration and mean diameter of particles suspended in a carrier gas

Procédé et dispositif de mesure de la concentration de nombre et du diamètre moyen des particules en suspension dans un gaz porteur

(84) Benannte Vertragsstaaten:
**DE FR GB**

(43) Veröffentlichungstag der Anmeldung:
**10.05.2006 Patentblatt 2006/19**

(73) Patentinhaber: **GRIMM Aerosol Technik GmbH & Co.KG**
**83404 Ainring (DE)**

(72) Erfinder:
• **Burtscher, Heinz**
**8964 Rudolfstetten (CH)**
• **Schmidt-Ott, Andreas**
**2585 Den Haag (NL)**

(74) Vertreter: **Frei Patent Attorneys**
**Frei Patentanwaltsbüro**
**Postfach 1771**
**8032 Zürich (CH)**

(56) Entgegenhaltungen:
**DE-A1- 19 824 744          US-A- 3 526 828**
**US-A- 3 763 428            US-A- 4 574 004**
**US-A- 5 214 386**

**Beschreibung**

Die Erfindung betrifft ein Verfahren und eine Vorrichtung zur Messung der Anzahlkonzentration und gegebenenfalls des mittleren Durchmessers von in einem Trägergas suspendierten Partikeln.

In Trägergasen suspendierte Partikel (Aerosole) spielen eine wesentliche Rolle in der Atmosphäre, der Atemluft und in vielen technischen Prozessen, zum Beispiel in den Emissionen aus Verbrennungsmotoren. Die Partikel werden oft als Schwebstaub oder Schwebeteilchen bezeichnet. Eine wichtige Aufgabe besteht darin, die Konzentration der Partikel messtechnisch zu erfassen. Bisherige Normen und Richtlinien geben die Partikelkonzentration meist in Form der Partikelmasse pro Volumeneinheit des Aerosols, beispielsweise in Mikrogramm pro Kubikmeter oder bei Emissionen von Kraftfahrzeugen in Masse pro gefahrene Strecke oder geleistete Energie ($\mu$g/km, $\mu$g/kWh) an. Die so angegebene Partikelbeladung erfasst praktisch nur Partikel, die grösser sind als ca. 0,1 Mikrometer, da die kleineren, die zwar in hoher Anzahlkonzentration auftreten können, massenmässig nicht ins Gewicht fallen. In letzter Zeit vermehren sich aber die Anzeichen, dass gerade die sehr kleinen Partikel von besonderer Bedeutung für die gesundheitsschädigende Wirkung von Partikeln sind. Messverfahren, die kleine Partikel mit entsprechender Gewichtung erfassen können, sind deshalb von aktueller Bedeutung. Im Vordergrund steht dabei eine Messung der Partikelanzahlkonzentration. Dies wird zum Beispiel auch in neuen Vorschlägen einer europäischen Expertenkommission für den Grenzwert von Emissionen von Dieselmotoren verlangt. Der interessierende Grössenbereich reicht im Fall von Dieselpartikeln von einigen Nanometern bis einige hundert Nanometer. Noch grössere Partikel haben auf die Anzahlkonzentration keinen wesentlichen Einfluss.

Heute werden zur Messung der Partikelanzahlkonzentration fast ausschliesslich Kondensationskernzähler eingesetzt (siehe zum Beispiel Aerosol Measurement, Principles, Techniques and Applications. P.A. Baron and K. Willeke, Wiley, New York, 2001). Dabei werden die Partikel in eine Umgebung mit einem übersättigten Dampf (z.B. Butanoldampf) gebracht. Der Dampf kondensiert auf den Partikeln, wodurch diese soweit wachsen, dass sie anschliessend durch Messung der Lichtstreuung detektiert werden können. Das Zählen der Lichtblitze der einzelnen Partikel erlaubt eine direkte Konzentrationsbestimmung. Diese Methode ist sehr empfindlich, es können auch extrem niedrige Konzentrationen gemessen werden. Sie erfordert aber insbesondere eine sehr genaue Einhaltung der Temperaturen bei der Erzeugung und Aufkondensation des übersättigten Dampfes. Das macht sie einerseits aufwendig und andererseits abhängig von den Umgebungsbedingungen.

Eine direkte Zählung der Partikel durch Messung der Lichtstreuung ohne vorheriges Wachstum (optischer Partikelzähler, siehe zum Beispiel Aerosol Measurement, Principles, Techniques and Applications. P.A. Baron and K. Willeke, Wiley, New York, 2001) ist nur bei grösseren Partikeln möglich, da die Streuintensität sonst unmessbar klein ist.

Sensoren, die auf der Anlagerung von Ionen beruhen, sind in verschiedenen Ausführungen bekannt. Meist bestehen sie aus einer Kombination eines Aufladerteils, in welchem sich Ionen an Partikel anlagern und eines Messteils, in welchem im kontinuierlichen Durchfluss die von den Partikeln aufgenommenen Ladungen erfasst werden (A. Schmidt-Ott, Th. Kauffeldt, VDI Berichte Nr. 1443, VDI Verlag, Düsseldorf, 1999, Kasper, M., U. Matter, H. Burtscher, N. Bukowiecki and A. Mayer, SAE Technical Paper Series: 2001-01-0216.). Der Messteil bestimmt den entsprechenden elektrischen Strom und wird als Aerosolelektrometer bezeichnet. Wenn die Anlagerung durch reine Diffusion erfolgt, kann damit der totale Ionenanlagerungsquerschnitt der Partikel gemessen werden. Darauf beruht die Definition der ‚aktiven Oberfläche' eines Aerosols (Baltensperger, U., E. Weingartner, H. Burtscher, and J. Keskinen. in Aerosol Measurement, Principles, Techniques and Applications. Ed. P.A. Baron and K. Willeke, Wiley, New York, 2001, pp. 387-418.). Sensoren, welche aus einer Kombination eines Diffusionsaufladers mit einem sog. Aerosolelektrometer beruhen, werden durch verschiedene Firmen hergestellt, z.B. der Electrical Aerosol Detector 3070A der Firma TSI, USA. Der gemessene Strom ist annähernd proportional zum Produkt aus der Partikelkonzentration und dem mittleren Partikeldurchmesser und wird entsprechend geeicht. Das Messsignal des genannten Geräts gibt dann auch laut Hersteller die "Gesamtlänge" der Aerosolpartikel in der Volumeneinheit an, wenn man sie in einer Kette aufreihen würde. Hieraus kann allerdings weder der mittlere Durchmesser noch die Partikelanzahlkonzentration hergeleitet werden.

Die Anlagerung von Ionen an Aerosolpartikel wird dann Diffusionsaufladung genannt, wenn der Transport der Ionen zu den Partikeln vorwiegend durch Diffusion erfolgt (Aerosol Measurement, Principles, Techniques and Applications. P.A. Baron and K. Willeke, Wiley, New York, 2001). Der Übergang zwischen Diffusionsaufladung und Feldaufladung ist fliessend. Bei Atmosphärendruck und Zimmertemperatur gilt als Faustregel in etwa, dass bei einer elektrischen Feldstärke E in V/cm mit $E < 500/D_P$ [$\mu$m] die Diffusionsaufladung dominiert. Hier ist $Dp$ der Durchmesser der aufzuladenden Partikel.

Wenn andererseits die Ionenanlagerung unter dem dominanten Einfluss eines elektrischen Feldes erfolgt, spricht man von Feldaufladung. Durch die Kombination eines Feldaufladers mit einer Bestimmung der Aerosolleitfähigkeit ist es prinzipiell möglich, eine zur dritten Potenz des Partikeldurchmessers proportionale Grösse zu bestimmen. Bei bekannter Dichte kann damit auf die Partikelmasse geschlossen werden (Schmidt-Ott, 1998 DE 198 24 744 A1).

Zur Messung der elektrischen Leitfähigkeit eines Aerosols sind in der Literatur bereits die folgenden Prinzipien von Leitfähigkeitssensoren 1) bis 3) beschrieben.

1) Das Aerosol durchströmt den Zwischenraum zwischen zwei Elektroden, welche an die beiden Pole einer Gleichspannung angeschlossen werden. Hierdurch wird ein Stromkreis gebildet, in welchen zur Strommessung ein Amperemeter eingebracht wird. Dieser Strom ist zur Leitfähigkeit des Aerosols proportional. Die Proportionalitätskonstante kann durch Eichung oder Berechnung ermittelt werden. Die Funktionsweise eines solchen Leitfähigkeitssensors ist in Schmidt-Ott, 1998 DE 198 24 744 A1, Seite 4-5 beschrieben.

2) Das Aerosol durchströmt den Zwischenraum zwischen zwei Elektroden, welche an die beiden Pole einer Wechselspannung angeschlossen werden. Hierdurch wird ein Stromkreis gebildet, in welchen zur Strommessung ein phasenempfindliches Amperemeter eingebracht wird. Der Quotient aus dem Stromanteil, der in Phase mit der angelegten Spannung ist und dieser Spannung ist zur Leitfähigkeit proportional. Die Proportionalitätskonstante kann durch Eichung oder Berechnung ermittelt werden. Die Funktionsweise eines solchen Leitfähigkeitssensors ist in A. Schmidt-Ott, H.C. Siegmann, Appl. Phys. Lett. 32, 710 (1978) beschrieben.

3) Wie in 1) durchströmt das Aerosol den Zwischenraum zwischen zwei Elektroden, welche an die beiden Pole einer Gleichspannung angeschlossen werden. Das Aerosol durchströmt ferner ein dahinter befindliches Aerosolelektrometer. Gemessen wird die Veringerung $\Delta I$ des Aerosolelektrometerstromes I bei Einschalten der Gleichspannung, d.h. bei Erhöhung dieser Spannung von 0 auf einen Wert Umax . $\Delta I$/ Umax ist proportional zur Aerosolleitfähigkeit. Die Proportionalitätskonstante kann durch Eichung oder Berechnung ermittelt werden. Hierbei sollte darauf geachtet werden, dass die relative Stromänderung $\Delta I$/I klein, d.h. in der Regel <10% bleibt. Die Funktionsweise eines solchen Leitfähigkeitssensors ist in Schmidt-Ott, 1998 DE 198 24 744 A1, Seite 4-5 beschrieben. Eine ebenfalls in der genannten Referenz erklärte Variante dieses Leitfähigkeitssensorprinzips besteht darin, dass das Ein- und Ausschalten der genannten Spannung periodisch erfolgt, oder dass eine Wechselspannungsquelle mit der Amplitude $\Delta U$ an die genannten Elektroden angelegt wird. Hierdurch wird der gemessene Strom I periodisch moduliert, und die Amplitude dieser Modulation beträgt $\Delta I$. $\Delta I$/$\Delta U$ ist dann die zur Leitfähigkeit proportionale Messgrösse. Diese Variante hat den Vorzug hoher erzielbarer Empfindlichkeit durch Einsatz eines sog. Lock-in-Verstärkers. Solche Verstärker werden in der Messtechnik häufig eingesetzt. Sie sind dann anwendbar, wenn ein zu messendes Signal (hier der Aerosolelektrometerstrom) periodisch ist und eine periodische Referenzgrösse (hier die Spannung der Wechselspannungsquelle) vorhanden ist.

Aus der deutschen Offenlegungsschrift 198 24 744 ist eine Vorrichtung zur Messung des Staubgehalts in Gasen bekannt, mit der die Massenkonzentration von suspendierten Partikeln gemessen wird. Die Vorrichtung beruht auf einer in der Schrift erstmals publizierten proportionalen Abhängigkeit der Leitfähigkeit eines vorgängig mittels Feldaufladung elektrisch aufgeladenen Aerosols von der Massenkonzentration der im Aerosol vorhandenen Partikel.

Auch US-Patentschrift 3 526 828 lehrt ein Verfahren und eine Vorrichtung zum Messen der Teilchen-Massenkonzentration in einem Aerosol, hier mittels Messung des von diffusionsaufgeladenen Teilchen abgeschiedenen Stroms.

Die US-Patentschrift 5 214 386 zeigt ein Verfahren und eine Vorrichtung zum Messen von Grösse, Ladung, Geschwindigkeit und Konzentration von Teilchen in einem Aerosol.

Es ist Aufgabe der Erfindung, ein Verfahren und eine Vorrichtung zum Messen der Anzahlkonzentration und/ oder des mittleren Durchmessers von Schwebeteilchen zur Verfügung zu stellen, welche Nachteile bestehender Verfahren und Vorrichtungen überwinden und welche insbesondere auch für mittelgrosse und kleine Schwebeteilchen geeignet sind und dabei vergleichsweise wenig von Umgebungsbedingungen abhängig sind.

Gemäss der Erfindung werden die Anzahlkonzentration und ggf. der Partikeldurchmesser gemessen, indem das Aerosol in einem Aerosolauflader aufgeladen und anschliessend dessen Leitfähigkeit gemessen wird.

Das erfindungsgemässe Verfahren beinhaltet die in Anspruch 1 erwähnten Schritte, u.a.

A. Elektrisch Aufladen des Aerosols

B. Messen der Leitfähigkeit des aufgeladenen Aerosols

C. Ermitteln einer Partikel-Anzahlkonzentration aus der Leitfähigkeit

Das Aufladen im Schritt A. sollte so geschehen, dass der Anteil der Diffusionsaufladung am gesamten Aufladungsprozess überwiegt. Dies bedeutet, dass vorzugsweise $E \leq 1000/D_P$, zum Beispiel $E < 500/D_P$, wenn die elektrische Feldstärke E in V/cm und der Partikeldurchmesser $Dp$ in Mikrometern gegeben sind. Eine Einrichtung, welche ein Aerosol elektrisch auflädt wobei primär Diffusionsaufladung zum Tragen kommt wird im Folgenden auch als "Diffusionsauflader" bezeichnet.

Die Messung im Schritt B kann an sich gemäss irgendeinem bereits bekannten oder noch zu entwickelnden Messprinzip geschehen.

Das Ermitteln der Partikel-Anzahlkonzentration aus der Leitfähigkeit kann durch eine Multiplikation der Leitfähigkeit mit einem Eichfaktor geschehen, welcher von der Aufladeeffizienz (d.h. von im Schritt A. gewählten Parametern) und von apparativen Grössen (Geometrie, Geräteempfindlichkeiten etc.) abhängt.

Durch eine Kombination mit einer an die Leitfähigkeitsmessung anschliessend durchgeführten Messung des Gesamtstromes können weitere physikalische Grössen wie der mittlere Teilchendurchmesser bestimmt werden und/oder es kann die mittlere Ladung pro Partikel durch Regeln der Absaugspannung oder durch Regeln der Aufladereffizienz (bspw. mittels einer Gitter- oder Elektrodenspannung) konstant gehalten werden. Es kann auch ein Regelungsverfahren verwendet werden, in welchem sowohl die Absaugspannung als auch die Aufladereffizienz geregelt werden.

Die erfindungsgemässe Vorrichtung gemäß Anspruch 15 dient zur Messung der Anzahlkonzentration und/oder des mittleren Durchmessers von Partikeln eines Aerosols, unter Verwendung des obigen Verfahrens. Sie besitzt aufweisend eine Gas führende Anordnung (bspw. einen Gaskanal) mit Fördermitteln zum Fördern eines Aerosols, einen Diffusionsauflader und einen Leitfähigkeitssensor, welche so angeordnet sind, dass von den Fördermitteln gefördertes Aerosol den Diffusionsauflader und den Leitfähigkeitssensor durchströmt, wobei das Aerosol im Bereich des Leitfähigkeitssensors aufgeladene Partikel enthält. Die Vorrichtung besitzt ferner Auswertemittel zum Bestimmen einer Anzahlkonzentration aus der vom Leitfähigkeitssensor gemessenen Leitfähigkeit.

"Gas führend" bedeutet hier, dass ein Innenraum vorhanden ist, in welchem wesentliche Anteile des vorhandenen Gases oder Aerosols führ- bzw. förderbar sind; die Anordnung kann, muss aber nicht gasdicht sein. Die Anordnung kann aneinander angeschlossene im Wesentlichen gasdichte Gefässe und Leitungen beinhalten. Sie kann insbesondere einen offen in die Umgebungsathmosphäre mündenden Ausgang aufweisen.

In denjenigen Fällen, in denen der Gesamtstrom bestimmt werden muss — bspw. wenn der mittlere Partikeldurchmesser ermittelt werden soll oder wenn der Gesamtstrom zur Regelung von Parametern des Aufladers oder des Leitfähigkeitssensors verwendet werden soll, beinhaltet die Vorrichtung ferner ein Aerosolelektrometer. Dies ist logischerweise auch dann der Fall, wenn der Leitfähigkeitssensor selbst wie oben unter 3) dargelegt ein Aerosolelektrometer beinhaltet. Das Aerosolelektrometer kann einen von einem Faradaykäfig umgebenen Filter und daran angeschlossen ein Elektrometer beinhalten.

Die elektrische Feldstärke, unter welcher sich die Partikel wahrend des Aufladungsvorgangs befinden, genügt für die in Betracht kommenden Partikeldurchmesser der oben genannten Bedingung für Diffusionsaufladung. Der Auflader wird daher als Diffusionsauflader bezeichnet. Für Umweltaerosole kann angenommen werden, dass Partikel, die grösser als 0,5 $\mu$m sind, in der Anzahlkonzentration nicht ins Gewicht fallen. Um für alle Partikel, die kleiner als 0,5 $\mu$m sind, sicher im Bereich der Diffusionsaufladung zu bleiben, sollte die Feldstärke im Aufladungsraum nicht grösser als 1000 V/cm sein. Die Vorrichtung zur Messung der elektrischen Leitfähigkeit, die durch die geladenen Partikel entsteht, kann beispielsweise auf die oben genannten verschiedenen Arten realisiert werden.

Die Erfindung macht sich die neue Erkenntnis zu Nutze, dass die Leitfähigkeit eines Diffusionsaufgeladenen Aerosols proportional zur Partikelkonzentration ist, unabhängig von der Partikelgrösse.

Der mittlere Beitrag jedes einzelnen Partikels zur Leitfähigkeit ist

$$\overline{\sigma}_P \propto b \cdot \overline{q} \qquad\qquad (1)$$

wobei **b** die elektrische Beweglichkeit eines Partikels ist, das eine Elementarladung trägt und $\overline{q}$ ist seine mittlere elektrische Ladung. Im Ensemble ist die mittlere Partikelladung $\overline{q} = p \cdot e$ entscheidend, wobei e die Elementarladung und $p$ die Ionenanlagerungswahrscheinlichkeit ist, welche von der Partikelgrösse abhängt. $p$ wiederum ist proportional zum Anlagerungsquerschnitt $K$, bzw. zur aktiven Oberfläche der Partikel. Anlagerungsquerschnitt $K$ und Kehrwert der Partikelbeweglichkeit $b$ hängen beide in gleicher Weise von der Kollisionswahrscheinlichkeit zwischen Partikel und Gasmolekülen ab. $K$ und $b$ sind deshalb invers proportional (A. Keller, M. Fierz, K. Siegmann, and H. C. Siegmann, and A. Filippov, J. Vac. Sci. Technol. A 19.1 2001, 1-8).

$$K \propto b^{-1} \qquad\qquad (2)$$

Damit wird der mittlere Beitrag eines Partikels zur Leitfähigkeit

$$\overline{\sigma}_P \propto b \cdot \overline{q} \propto b \cdot p \cdot e \propto b \cdot K \cdot e \propto b \cdot b^{-1} \cdot e = e \qquad\qquad (3)$$

Das bedeutet, dass die Beweglichkeit und damit auch die Partikelgrösse nicht mehr eingeht. Der Beitrag jedes einzelnen Partikels zur Leitfähigkeit unabhängig von seiner Grösse ist gleich gross, die gesamte Leitfähigkeit wird deshalb proportional zur Anzahl der im Messvolumen vorhandenen Partikel. Eine Leitfähigkeitsmessung kann demnach zur Messung der Partikelkonzentration N herangezogen werden. Das erfindungsgemässe Verfahren und die erfindungsgemässe Vorrichtung machen erstmals von dieser neuen und bisher unpublizierten Erkenntnis Gebrauch.

Besonders gut funktioniert das erfindungsgemässe Verfahren/die erfindungsgemässe Vorrichtung, wenn durch die Diffusionsaufladung der Ladungszustand des Aerosols nicht zu stark erhöht wird. Wenn dies nicht mehr der Fall ist, nimmt die Genauigkeit etwas ab. Dies weil der Anlagerungsquerschnitt von diesem Ladungszustand abhängt, da ein geladenes Partikel aufgrund der Coulomb-Abstossung mit kleinerer Wahrscheinlichkeit weitere Ionen anlagert. Wir sprechen von "schwacher Diffusionsaufladung", wenn der Ladungszustand des Aerosols so unwesentlich erhöht wird, dass K während des gesamten Aufladungsvorgangs ungefähr dem Wert für den Ausgangszustand entspricht, in der Regel dem Anlagerungsquerschnitt des neutralen Aerosols. Unter dieser Voraussetzung kann der Proportionalitätsfaktor in der Relation (2) als konstant angesehen werden. Bei schwacher Diffusionsaufladung ist auch die Relation (1) genauer erfüllt, da b die Beweglichkeit eines Partikels mit einer Elementarladung bezeichnet und Mehrfachaufladung im Wesentlichen ausgeschlossen werden soll. Die Gültigkeit der Überlegungen oben ist für praktische Zwecke aber auch dann noch in ausreichendem Masse erfüllt, wenn der Ladungszustand der Partikel im Wesentlichen eine Elementarladung nicht überschreitet oder auch wenn die Ladung pro Partikel höher als eine Elementarladung ist. Der Parameter $n_i t$, der die Stärke der Aufladung bestimmt, ist das Produkt aus Ionenkonzentration $n_i$ und der Dauer t, während der sich jedes Partikel im Aufladungsraum, der mit Ionen angereicherten Zone, befindet. Es gibt verschiedene Ausführungsbeispiele von Diffusionsaufladern, bei welchen $n_i t$ variabel ist (z.B. P. Büscher, A. Schmidt-Ott and A. Wiedensohler, Journal of Aerosol Science, Volume 25, 1994, Pages 651-663.). Vorzugsweise wird das Produkt $n_i t$ durch Anpassungen der Io-nenkonzentration $n_i$ variiert, da die Durchflussgeschwindigkeit, welche die Zeit $t$ bestimmt, meist vorzugswesie konstant gehalten wird. Die Ionenkonzentration kann beispielsweise über die Absaugspannung aus einem Bereich mit hoher Ionenkonzentration in den Aufladungsraum geregelt werden.

Wird neben der Leitfähigkeit auch noch mittels eines Aerosolelektrometers der gesamte Strom geladener Partikel gemessen, so erhält man gemäss dem unter vorstehend beschriebenen Gerät zur Messung der "Gesamtlänge" auch das Produkt aus dem mittleren Partikeldurchmesser und der Anzahlkonzentration. Wird die Anzahlkonzentration mit der erfindungsgemässen Vorrichtung bestimmt, so führt dies durch Division auf die mittlere Partikelgrösse. Durch diese Kombination lassen sich also Anzahlkonzentration und mittlerer Durchmesser bestimmen.

Um die Bedingung der schwachen Diffusionsaufladung sicherzustellen, kann der Aufladungsparameter auf einen konstanten, genügend kleinen Wert eingestellt werden. Eine flexiblere Variante besteht darin, den Aufladungsparameter in Abhängigkeit des Messresultats iterativ einzustellen. Die dazu erforderliche mittlere Partikelladung, die deutlich kleiner als 1 sein soll, kann aus Gesamtstrom und Anzahlkonzentration einfach bestimmt werden. Eine andere Variante ist, dass der Messprozess von einem Computer gesteuert wird, dessen Programm die Aufladungstheorie, beispielsweise nach M. Adachi, Y. Kousaka, K. Okuyama, J. Aerosol Sci. 16, 109 (1985), berücksichtigt. Damit kann aus Partikeldurchmesser und $n_i t$-Produkt die mittlere Ladung gerechnet werden bzw. umgekehrt bei gegebenem Partikeldurchmesser und mittlerer Ladung das dazu benötigte $n_i t$-Produkt berechnet werden.

Im Folgenden werden Ausführungsbeispiele der Erfindung anhand von Figuren genauer beschrieben. In den Figuren zeigen:

- Fig. 1 einen Diffusionsauflader einer erfindungsgemässen Vorrichtung

- Fig. 2 eine Messanordnung zur Messung des Gesamtstroms, d.h. der Gesamtladung pro Zeiteinheit

- Fig. 3-6 schematisch je eine Ausführungsform einer erfindungsgemässen Vorrichtung zur Durchführung des erfindungsgemässen Verfahrens

- Fig. 7 ein Schema für die Regelung des Aufladers

- Fig. 8 ein Schema für die Regelung der Absaugspannung

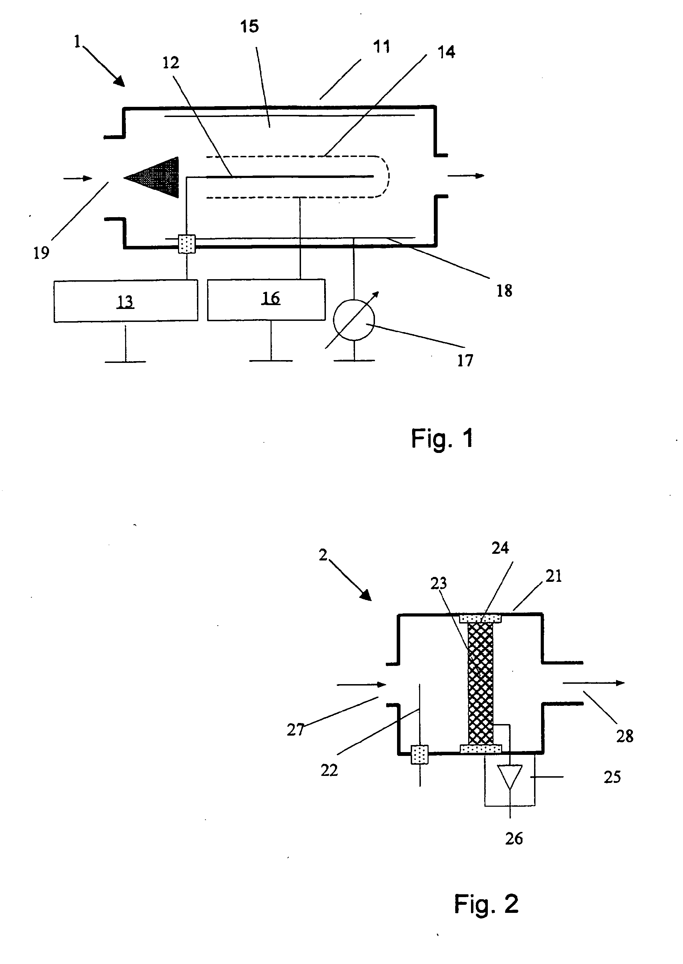

Die Aufladung kann durch Ionen erfolgen, die durch eine elektrische Koronaentladung erzeugt werden. Eine mögliche Konfiguration eines Aufladers 1 ist in **Figur 1** gezeigt. In einem zylindrischen Gehäuse 11 mit einem Aerosoleinlass 19 und einem Aerosolauslass 20 befindet sich axial angeordnet ein dünner Draht 12, an dem eine Hochspannung 13 anliegt die gross genug ist um am Draht eine stille elektrische Entladung (Korona) zu erzeugen. Eine Gitteranordnung 14 schirmt das vom Aerosol durchströmte Volumen 15 vom Hochspannungsfeld ab. Die Anzahl der durch das Gitter in den Raum 5 gelangenden Ionen kann durch eine kleine an diesem Gitter angelegte Spannung 16 variiert und durch ein Amperemeter 17 an der Elektrode 18 gemessen werden. Durch Wahl der Spannung 16 kann die Effizienz der Aufladung bestimmt werden, zum Beispiel so dass je nach Partikelgrösse die mittlere Partikelladung möglichst gross, aber immer deutlich kleiner als eins ist. Eine möglichst grosse mittlere Partikelladung bringt grössere Messströme und daher grössere relative Messgenauigkeiten mit sich.

Zur Regelung der Ionenkonzentration im Aufladeraum (d.h. im Raum zwischen dem Gitter 16 und der Elektrode 18) kann anstelle der Gitterspannung (d.h. des elektrischen Potentials des Gitters) auch das elektrische Potential der Elektrode 18 variiert werden; dann kann bspw. das Gitter 16 auf ‚Ground'-Potential gehalten werden.

Die Durchführung der Gesamtstrommessung erfolgt auf an sich bekannte Weise nach dem Prinzip des Aerosolelektrometers. Hier werden die Partikel in einem elektrisch isoliert montierten Filter gesammelt und der dort entstehende Strom wird gemessen, wie dies bei den weiter oben erwähnten Sensoren auch bereits gemacht wird. Ein Beispiel eines Aerosolelektrometers 2 zeigt **Figur 2.** In einem dichten, elektrisch leitenden Gehäuse 21 mit einem Aerosoleinlass 26 und einem Auslass 27 werden zunächst nicht an Partiklen angelagerte Ionen, welche die Messung verfälschen könnten, durch eine Ionenfalle 22 abgeschieden. Dies kann ein Stab sein, der auf eine Spannung gelegt wird die hoch genug ist, um die Ionen abzuscheiden. Aufgrund der geringeren Mobilität werden aufgeladene Partikel bei geeigneter Wahl des elektrischen Potentials des Stabs nicht zu einem die Messung beeinflussenden Prozentsatz am Stab angelagert. Anschliessend werden die Aerosolpartikel in einem Filter 23 aufgefangen, der isoliert (Isolator 24) montiert und mit einem Stromverstärker 25 verbunden ist, dessen Ausgang der Filterstrom 26 ist. Der gemessene Strom entspricht der Gesamtladung pro Zeiteinheit.

Der Leitfähigkeitssensor wird zwischen Auflader 1 und (der optional vorhandenen) Gesamtstrommessung durch ein Aerosolelektrometer 2 angeordnet.

Für die Ausführung des Leitfähigkeitssensors gibt es verschiedene Varianten, von denen drei an sich vor die Messung der Aerosolleitfähigkeit bereits bekannt sind und einleitend beschrieben wurden.

Immer gilt, dass für eine Leitfähigkeitsmessung ein elektrisches Feld benötigt wird, in dem sich die Partikel bewegen. Diese Bewegung führt auch zu einer gewissen Abscheidung der Partikel an den Wänden der Messkammer, welche die eventuell benötigte Messung des Gesamtstromes verfälschen kann. Dieser Effekt wird mit Vorteil so klein gehalten, dass die Verfälschung unbedeutend ist. Hingegen kann dieses Feld auch die Funktion der Ionenfalle übernehmen. Da die Beweglichkeit der Partikel von deren Grösse abhängt, muss das elektrische Feld der Partikelgrösse angepasst werden, um die Abscheidung genügend klein zu halten. Eine Möglichkeit ist zum Beispiel, das Feld immer so gross zu machen, dass der Strom der abgeschiedenen Partikel einen immer gleichen (kleinen) Prozentsatz des gesamten Partikelstromes ausmacht.

Varianten der Leitfähigkeitsmessung:

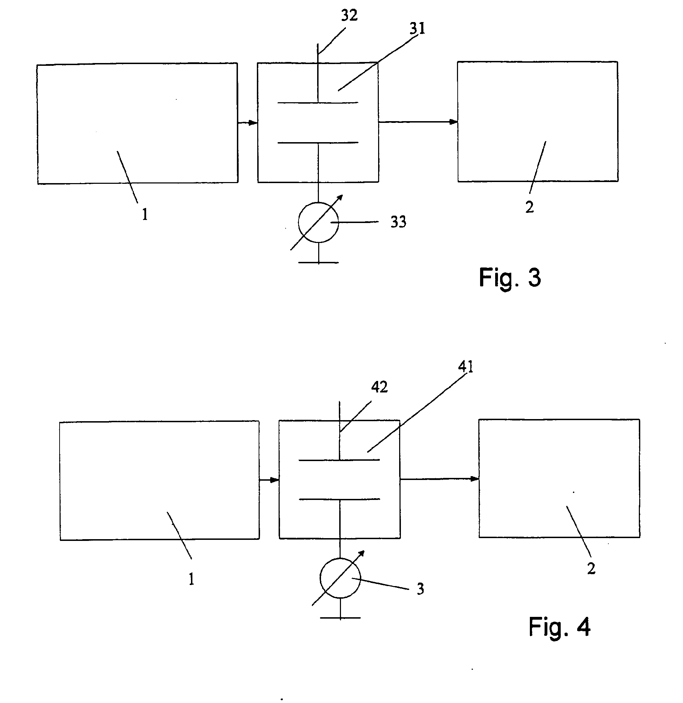

1. Strommessung an einem Elektrostatischen Abscheider gemäss Variante 1 des Standes der Technik **(Figur 3).** Zwischen den Kondensatorplatten 31 eines Kondensators, der vom Aerosol durchströmt wird, wird eine Gleichspannung 32 angelegt. Der durch abgeschiedene Partikel bewirkte Strom wird mit einem Amperemeter 33 gemessen.

2. Wechselstrommessung in einem AC-Feld gemäss Variante 2 des Standes der Technik **(Figur 4).** Anstatt einer Gleichspannung wird hier eine Wechselspannung 42 an den Kondensatorplatten 41 angelegt. Der resultierende Strom wird jetzt mit einem phasenempfindlichen Amperemeter 43 (Lock In Technik) gemessen. Dieser berücksichtigt auch die Phasenverschiebung zwischen der anregenden Spannung und dem gemessenen Strom.

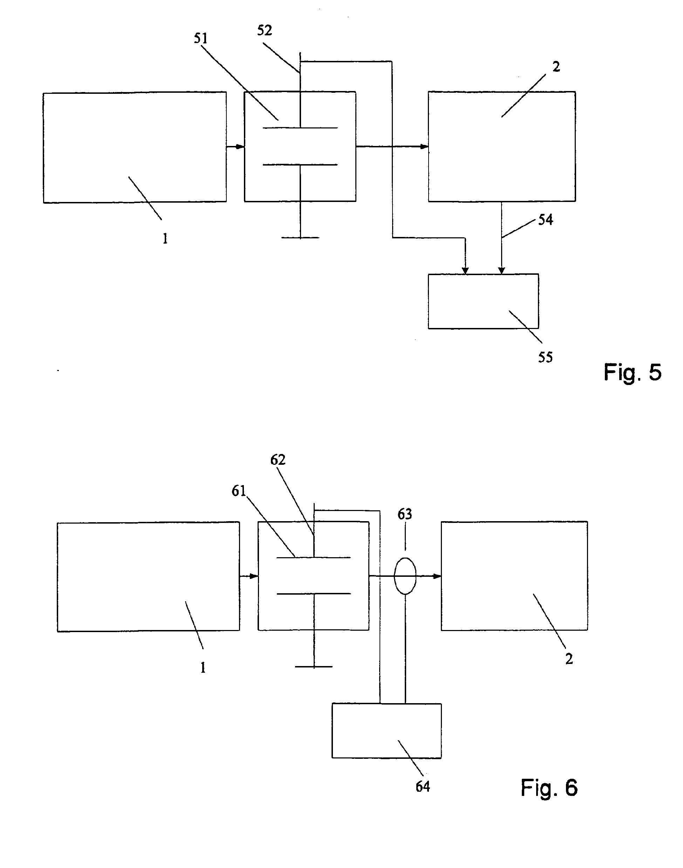

3. Filterstromänderung durch periodisch geschalteten Abscheider gemäss Variante 3 des Standes der Technik **(Figur 5).** An die Kondensatorplatten 51 wird eine periodisch geschaltete Spannung 52 angelegt. Dies kann eine Rechteckspannung sein, die zwischen null oder einem Minimalwert, der zur Abscheidung der Ionen erforderlich ist, und einem Wert, bei dem ein kleiner Teil der Partikel abgeschieden wird, hin und hergeschaltet wird. Die Komponente des im Messfilter 53 gemessenen Stromes 54, die dieselbe Frequenz wie die periodisch geschaltete Spannung 52 hat, wird mit einem Lock-In Verstärker 55 gemessen.

Anstelle einer Spannung 52, die im Wesentlichen zwischen 0V und einem zur Abscheidung eines kleinen Partikelanteils geeigneten Spannung schwankt, kann auch eine mittelwertfreie Wechselspannung angewendet werden. Da dann der Strom 54 in jedem Nulldurchgang ein Maximum und in jedem Scheitelwert ein Minimum hat, weist er gegenüber der Spannung 52 die doppelte Frequenz auf. Bei Anwendung des Lock-in-Verfahrens muss daher ein Signal der doppelten Frequenz aus der Spannung 52 generiert werden und als Referenz dienen.

4. Eine weitere Möglichkeit ist eine Influenzstrommessung hinter dem periodisch geschalteten Abscheider **(Figur 6).** Wie in Variante 3 wird an den Elektroden 61 eine Spannung 62 angelegt, die periodisch zwischen einem Wert in der Nähe von null und einem Wert, bei dem ein kleiner Teil der Partikel abgeschieden wird, hin- und herschwankt. Anschliessend durchströmt das Aerosol eine Ringelektrode 63. Wenn in einer Halbperiode die Ladung im Aerosolstrom in der Nachbarschaft der Ringelektrode zunimmt, entsteht durch Influenz in der Ringelektrode ein Strom, der der Aenderung (Ableitung) des Aerosolladungs-Stromes entspricht. In der nächsten Halbperiode nimmt die Ladung in der Nachbarschaft der Ringelektrode ab, und der Ringelektrodenstrom wird negativ. Es lässt sich über das Influenzgesetz zeigen, dass bei periodischer Taktung des Aerosolstromes ein Ringelektrodenstrom entsteht, dessen Amplitude proportional zur periodischen Änderung des Aerosolladungsstroms ist, der durch die periodische Änderung der Spannung 62 entsteht. Ein zu dieser Amplitude proportionales Signal erhält man auch, wenn man den Mittelwert des synchron zur periodisch wechselnden Spannung 62 gleichgerichteten Ringelektrodenstroms berechnet. Die richtige Phasenbeziehung zwischen der periodisch wechselnden Spannung 62 und dem Ringelektrodenstrom erhält man durch Maximierung des gemittelten gleichgerichteten Ringelektrodenstroms. Die Schaltung 64 übernimmt die Aufgabe der synchronen Gleichrichtung in optimaler Phase und die Mittelwertbildung. Das Ausgangssignal ist zur Leitfähigkeit und damit zur Partikelkonzentration proportional und wird, ebenfalls in der Schaltung 64 mit einem Eichfaktor multipliziert.

Anstelle einer Spannung 62, die im Wesentlichen zwischen 0V und einem zur Abscheidung eines kleinen Partikelanteils geeigneten Spannung schwankt, kann auch eine mittelwertfreie Wechselspannung angewendet werden. Der Ringelektrodenstrom weist dann analog zu dem oben unter 3 beschriebenen Fall gegenüber der Spannung 62 die doppelte Frequenz auf. Bei Anwendung des Lock-in-Verfahrens muss daher ein Signal der doppelten Frequenz aus der Spannung 62 generiert werden und als Referenz dienen.

In den Anordnungen gemäss Figur 3 und 4 ist der Messfilter 2 optional. Er wird in diesen Ausführungsfomren nur dann benötigt, wenn entweder der mittlere Teilchendurchmesser bestimmt werden soll und/oder wenn der Gesamtstrom zur Regelung der Aufladung — beispielsweise über eine Gitter- oder Elektrodenspannung — und/oder zur Regelung der Absaugspannung im Leitfähigkeitssensor verwendet werden soll, wie das im Folgenden noch kurz beschrieben wird..

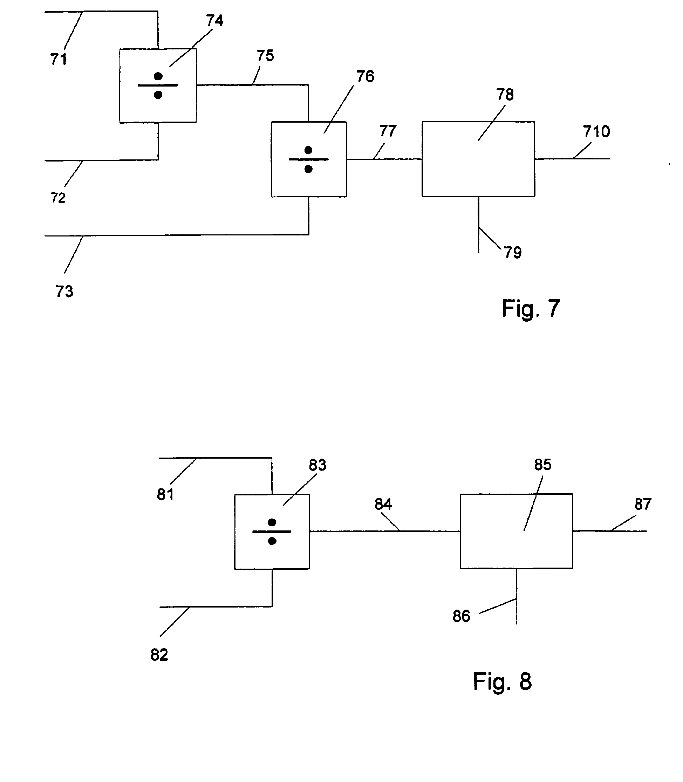

In **Figur 7** ist eine Möglichkeit aufgezeigt, wie die Effizienz des Aufladers so geregelt werden kann, dass die Bedingung , dass die mittlere Partikelladung deutlich kleiner als eine Elementarladung sein soll, immer erfüllt ist. Aus dem Gesamtstrom 71 (entsprechend dem Filterstrom 26 in Figur 2) und der Aerosol-Durchflussmenge 72 kann mittels einer Division 74 die Ladung pro Volumen 75 bestimmt werden. Aus dieser und der ebenfalls bestimmten Anzahlkonzentration 73 kann mit einer weiteren Division 76 die mittlere Ladung 77 bestimmt werden. Mit dieser Information kann ein Regler 78 über die Gitterspannung 710 (entsprechend 16 in Figur 1) die Effizienz des Aufladers so einstellen, dass die mittlere Ladung dem gewünschten Sollwert 79 entspricht.

Eine Möglichkeit für die automatische Einstellung der Absaugspannung (32, 42, 52 bzw. 62) ist in **Figur 8** gezeigt. Durch Division 83 des Stromes aus der Leitfähigkeitsmessung 81 und dem Gesamtstrom 82 wird eine zum Anteil abgeschiedener Partikel proportionale Grösse 84 bestimmt. Ein Regler 85 stellt mit dieser Information die Absaugspannung 87 so ein, dass der gewünschte Sollwert 86 erreicht wird.

Im Fall einer Regelung nach Figur 7 - und in jeder anderen Messanordnung, in welcher Parameter des Aufladers variiert werden - wird der Eichfaktor der das Verhältnis von Anzahlkonzentration zu Leitfähigkeit wiedergibt - abhängig von den Auflader-Parametern. Er kann anhand von im Voraus bestimmten Messkurven oder Tabellen näherungsweise in den Auswertemitteln - bspw. einem über eine Schnittstelle angeschlossenen Computer - gespeichert oder vom Benutzer eingegeben werden.

Sowohl die Möglichkeit nach Figur 7 als auch die Möglichkeit nach Figur 8 ist mit der Leitfähigkeitsmessung nach jeder der Varianten 1 bis 4 kombinierbar.

**Patentansprüche**

1.    Verfahren zur Messung der Anzahlkonzentration von Partikeln in einem Aerosol, wobei das Aerosol überwiegend durch Diffusionsaufladung elektrisch aufgeladen wird und anschliessend die Leitfähigkeit des aufgeladenen Aerosols gemessen und aus der Leitfähigkeit die Anzahlkonzentration ermittelt wird, indem die Leitfähigkeit mit einem Eichfaktor multipliziert wird.

2.    Verfahren nach Anspruch 1, **dadurch gekennzeichnet, dass** das Aufladen des Aerosols mittels eines Diffusionsaufladers geschieht

3.    Verfahren nach Anspruch 2, **dadurch gekennzeichnet, dass** die Feldstärke in einem Aufladungsraum des Diffusionsaufladers nicht grösser als 1000 V/cm ist.

4.    Verfahren nach einem der vorangehenden Ansprüche, **dadurch gekennzeichnet, dass** die Leitfähigeit des Aerosols ein einem vom Aerosol durchströmten Kanal gemessen wird, in welchem sich eine vom strömungsführenden Kanal isolierte Messelektrode und eine ebenfalls vom strömungsführenden Kanal isolierte spannungsführende Elektrode befinden, wobei an die spannungsführende Elektrode eine konstante Spannung angelegt wird und die Messelektrode an ein Strommessgerät angeschlossen ist, und dass ein Mass für die Aersololleitfähigkeit bestimmt wird, indem der gemessene Strom durch die angelegte Spannung dividiert wird.

5. Verfahren nach einem der Ansprüche 1 bis 3, **dadurch gekennzeichnet, dass** die Leitfähigeit des Aerosols in einem vom Aerosol durchströmten Kanal gemessen wird, in welchem sich eine vom strömungsführrenden Kanal isolierte Messelektrode und eine ebenfalls vom strömungsführenden Kanal isolierte spannungsführende Elektrode befinden, wobei an die spannungsführende Elektrode eine Wechselspannung angelegt wird und die Messelektrode an ein Strommessgerät angeschlossen ist, welches denjenigen Anteil des Stroms misst, welcher in Phase mit der Wechselspannung ist, und dass ein Mass für die Leitfähigkeit des Aerosols ermittelt wird, indem dieser Anteil durch den Wert der angelegten Wechselspannung dividiert wird.

6. Verfahren nach einem der Ansprüche 1 bis 3, **dadurch gekennzeichnet, dass** die Leitfähigeit des Aerosols in einem vom Aerosol durchströmten Kanal gemessen wird, in welchem sich eine vom strömungsführenden Kanal isolierte Messelektrode und eine ebenfalls vom strömungsführenden Kanal isolierte spannungsführende Elektrode befinden, wobei die spannungsführende Elektrode an eine sich periodisch verändernde elektrische Spannung angeschlossen ist, dass von der spannungsführenden Elektrode stromabwärts der gesamte Aerosolstrom gemessen wird, und derjenige Anteil des vom Aerosolelektrometer gemessenen elektrischen Stroms in seiner Amplitude bzw. seinem mittleren Betrag bestimmt wird, der die Frequenz oder die doppelte Frequenz der von der oben genannten Wechselspannungsquelle erzeugten Wechselspannung hat, und dass ein Mass für die Aerosolleitfähigkeit bestimmt wird, indem der Wert des gemessenen Anteils durch den Wert der Amplitude der angelegten Spannung dividiert wird.

7. Verfahren nach Anspruch 6, **dadurch gekennzeichnet, dass** die sich periodisch verändernde Spannung eine weitgehend mittelwertfreie Wechselspannung ist, dass für die Bestimmung der Stromamplitude ein Lock-in-Verstärker eingesetzt wird und dass das Referenzsignal des Lock-in-Verstärkers die doppelte Frequenz der angelegten Wechselspannung hat.

8. Verfahren nach Anspruch 6, **dadurch gekennzeichnet, dass** die sich periodisch verändernde Spannung im Wesentlichen zwischen 0V und dem Amplitudenwert oszilliert , dass für die Bestimmung der Stromamplitude ein Lock-in-Verstärker eingesetzt wird, dass das Referenzsignal des Lock-in-Verstärkers die Frequenz der angelegten Wechselspannung hat.

9. Verfahren nach einem der Ansprüche 1 bis 3, **dadurch gekennzeichnet, dass** die Leitfähigeit des Aerosols in einem vom Aerosol durchströmten Kanal gemessen wird, in welchem sich eine vom strömungsführenden Kanal isolierte Messelektrode und eine ebenfalls vom strömungsführenden Kanal isolierte spannungsführende Elektrode befinden, wobei die spannungsführende Elektrode an eine sich periodisch verändernde elektrische Spannung angeschlossen ist, dass sich von der spannungsführenden Elektrode stromabwärts eine Elektrode befindet, an welcher die Änderung der Stromes geladener Aerosolpartikel einen Influenzstrom bewirkt, dessen Amplitude bzw. mittlerer Betrag gemessen wird, und dass ein Mass für die Aerosolleitfähigkeit bestimmt wird, indem der Wert der gemessenen Amplitude durch den Wert der Amplitude der angelegten Spannung dividiert wird.

10. Verfahren nach Anspruch 9, **dadurch gekennzeichnet, dass** die sich periodisch verändernde Spannung eine weitgehend mittelwertfreie Wechselspannung ist, dass für die Bestimmung der Stromamplitude ein Lock-in-Verstärker eingesetzt wird, dass das Referenzsignal des Lock-in-Verstärkers die doppelte Frequenz der angelegten Wechselspannung hat.

11. Verfahren nach Anspruch 9, **dadurch gekennzeichnet, dass** die sich periodisch verändernde Spannung im Wesentlichen zwischen 0V und dem Amplitudenwert oszilliert, dass für die Bestimmung der Stromamplitude ein Lock-in-Verstärker eingesetzt wird, dass das Referenzsignal des Lock-in-Verstärkers die Frequenz der angelegten Wechselspannung hat.

12. Verfahren nach einem der vorangehenden Ansprüche, **dadurch gekennzeichnet, dass** die Messung der Leitfähigkeit unter Verwendung zweier Elektroden mit einem aerosoldurchströmten Zwischenraum durchgeführt wird, und dass zusätzlich zur elektrischen Leitfähigkeit der Gesamtstrom des aufgeladenen Aerosols nach dem Durchströmen des Zwischenraums gemessen und aus diesem Gesamtstrom und der Anzahlkonzentration der mittlere Durchmesser der Partikel ermittelt wird.

13. Verfahren nach einem der vorangehenden Ansprüche, **dadurch gekennzeichnet dass** die Messung der Leitfähigkeit unter Verwendung zweier Elektroden mit einem aerosoldurchströmten Zwischenraum durchgeführt wird, und dass zusätzlich zur elektrischen Leitfähigkeit der Gesamtstrom des aufgeladenen Aerosols nach dem Durchströmen des Zwischenraums gemessen wird und dass die zur Leitfähigkeitsmessung benötigte Spannung bzw. Spannungsamplitude so geregelt wird, dass das Verhältnis von Gesamtstrom zur Leitfähigkeit konstant bleibt.

14. Verfahren nach einem der Ansprüche 1 bis 12, **dadurch gekennzeichnet, dass** die Messung der Leitfähigkeit unter Verwendung zweier Elektroden mit einem aerosoldurchströmten Zwischenraum durchgeführt wird, und dass zusätzlich zur elektrischen Leitfähigkeit der Gesamtstrom des aufgeladenen Aerosols nach dem Durchströmen des Zwischenraums gemessen wird, und dass die Effizienz des Aufladers so geregelt wird, dass das Produkt des Verhältnisses aus dem Gesamtstrom der geladenen Partikel und den Leitfähigkeit mit der Aufladereffizienz konstant bleibt oder dass das Verhältnis zwischen Strom und Anzahlkonzentration konstant bleibt.

15. Vorrichtung zur Messung der Anzahlkonzentration und/oder des mittleren Durchmessers von Partikeln eines Aerosols, aufweisend eine Gas führende Anordnung mit Fördermitteln zum Fördern eines Aersols, einen Diffusionsauflader und einen Leitfähigkeitssensor, welche so angeordnet sind, so dass von den Fördermitteln gefördertes Aerosol den Diffusionsauflader und den Leitfähigkeitssensor durchströmt, wobei das Aerosol im Bereich des Leitfähigkeitssensors aufgeladene Partikel enthält, sowie Auswertemittel zum Bestimmen einer Anzahlkonzentration aus der vom Leitfähigkeitssensor gemessenen Leitfähigkeit, wobei die Vorrichtung zur Durchführung des Verfahrens nach einem der vorangehenden Ansprüche befähigt ist..

16. Vorrichtung nach Anspruch 15, **dadurch gekennzeichnet, dass** der Leitfähigkeitssensor ein Aerosolelektrometer zur Bestimmung des Gesamtstroms aufweist, welches Aerosolelektrometer einem Paar von Elektroden mit aerosoldurchströmtem Zwischenraum nachgeschaltet ist, oder dass die Vorrichtung zusätzlich zum Leitfähigkeitssensor ein diesem nachgeschaltetes Aerosolelektrometer aufweist..


**Claims**

1. Method for measuring the number concentration of particles in an aerosol, wherein the aerosol is electrically charged, mainly by means of diffusion charging and subsequently the conductivity of the charged aerosol is measured and that the number concentration is determined from the conductivity by multiplying the conductivity with a gauging factor.

2. Method according to claim 1, **characterised in that** the charging of the aerosol is effected by way of a diffusion charger.

3. Method according to claim 2, **characterised in that** the field strength in a charging space of the diffusion charger is no larger than 1000 V/cm.

4. Method according to one of the preceding claims, **characterised in that** the conductivity of the aerosol is measured in a channel through which the aerosol flows, in which a measurement electrode insulated from the channel leading the flow and a voltage-carrying electrode likewise insulated from the channel leading the flow are located, wherein a constant voltage is applied to the voltage-carrying electrode, and the measurement electrode is connected to a current measurement apparatus, and that a measure of the aerosol conductivity is determined **in that** the measured current is divided by the applied voltage.

5. Method according to one of the claims 1 to 3, **characterised in that** the conductivity of the aerosol is measured in a channel through which the aerosol flows and in which a measurement electrode insulated from the channel leading the flow and a voltage-carrying electrode likewise insulated from the channel leading the flow are located, wherein an alternating voltage is applied to the voltage-carrying electrode, and the measurement electrode is connected to a current measurement apparatus which measures that component of the current, which is in phase with the alternating voltage, and that a measure of the conductivity of the aerosol is determined **in that** this component is divided by the value of the applied alternating voltage.

6. Method according to one of the claims 1 to 3, **characterised in that** the conductivity of the aerosol is measured in a channel through which the aerosol flows and in which a measurement electrode insulated from the channel leading the flow and a voltage-carrying electrode likewise insulated from the channel leading the flow are located, wherein the voltage-carrying electrode is connected to a periodically changing electrical voltage, that the complete aerosol current downstream is measured by the voltage-carrying electrode, and that component of the electrical current measured by the aerosol electrometer which has the frequency or double the frequency of the alternating voltage produced by the above-mentioned alternating voltage source is determined in its amplitude or its average magnitude, and that a measure of the aerosol conductivity is determined **in that** the value of the measured component is divided by the value of the amplitude of the applied voltage.

7. Method according to claim 6, **characterised in that** the periodically changing voltage is an alternating voltage having essentially no mean non-zero mean value, that for determining the current amplitude a lock-in amplifier is applied, and that the reference signal of the lock-in amplifier has double the frequency of the applied alternating voltage.

8. Method according to claim 6, **characterised in that** the periodically changing voltage oscillates essentially between 0V and the amplitude value, that a lock-in amplifier is applied for determining the current amplitude, that the reference signal of the lock-in amplifier has the frequency of the applied alternating voltage.

9. Method according to one of the claims 1 to 3, the conductivity of the aerosol is measured in a channel through which the aerosol flows and in which a measurement electrode insulated from the channel leading the flow and a voltage-carrying electrode likewise insulated from the channel leading the flow are located, wherein the voltage-carrying electrode is connected to a periodically changing electrical voltage, that an electrode is located downstream of the voltage-carrying electrode, at which the change of the current of charged aerosol particles effects an influence current, whose amplitude or mean magnitude is measured, and that a measure of the aerosol conductivity is determined in that the value of the measured amplitude is divided by the value of the amplitude of the applied voltage.

10. Method according to claim 9, **characterised in that** the periodically changing voltage is an alternating voltage having essentially no mean non-zero mean value, that a lock-in amplifier is applied for determining the current amplitude, that the reference signal of the lock-in amplifier has double the frequency of the applied alternating current.

11. Method according to claim 9, **characterised in that** the periodically changing voltage oscillates essentially between 0V and the amplitude value, that a lock-in amplifier is applied for determining the current amplitude, that the reference signal of the lock-in amplifier has the frequency of the applied alternating voltage.

12. Method according to one of the preceding claims, **characterised in that** the measurement of the conductivity is carried out using two electrodes with an intermediate space through which the aerosol flows and that in addition to the electrical conductivity, the total current of the charged aerosol is measured and the average diameter of the particles is evaluated from this total current and the number concentration.

13. Method according to one of the preceding claims, **characterised in that** the measurement of the conductivity is carried out using two electrodes with an intermediate space through which aerosol flows and that in addition to the electrical conductivity, the total current of the charged aerosol is measured and that the voltage or voltage amplitude respectively, which is required for the conductivity measurement is controlled such that the ratio of the total current to the conductivity remains constant.

14. Method according to one of the claims 1 to 12, **characterised in that** the measurement of the conductivity is carried out using two electrodes with an intermediate space through which aerosol flows and in addition to the electrical conductivity, the total current of the charged aerosol is measured, and that the efficiency of the charger is controlled such that the product of the ratio of the total current of the charged particles to the conductivity and the charger efficiency remains constant or that the ratio between the current and number concentration remains constant.

15. Device for measuring the number concentration and/or of the average diameter of particles of an aerosol, in particular for carrying out the method according to one of the preceding claims, comprising a gas-leading arrangement with delivery means for delivering an aerosol, a diffusion charger and a conductivity sensor, which are arranged such that aerosol delivered by the delivery means flows through the diffusion charger and the conductivity sensor, wherein the aerosol in the region of the conductivity sensor contains charged particles, as well as evaluation means for determining a number concentration from the conductivity measured from the conductivity sensor, wherein the device is able to carry out the method according to one of the preceding claims.

16. Device according to claim 15, **characterised in that** the conductivity sensor comprises an aerosol electrometer for determination of the total flow, which aerosol electrometer is downstream from a pair of electrodes with an intermediate space through which aerosol flows or that the device, in addition to the conductivity sensor, comprises an aerosol electrometer downstream from this.

**Revendications**

1. Procédé de mesure de la concentration en nombre de particules dans un aérosol, l'aérosol étant chargé électriquement, principalement par diffusion, la conductivité de l'aérosol chargé étant ensuite mesurée et la concentration en nombre étant déterminée à partir de la conductivité en multipliant la conductivité par un facteur d'étalonnage.

2. Procédé selon la revendication 1, **caractérisé en ce que** l'aérosol est chargé à l'aide d'un chargeur à diffusion.

3. Procédé selon la revendication 2, **caractérisé en ce que** l'intensité du champ dans l'espace de chargement du chargeur à diffusion n'est pas supérieure à 1 000 V/cm.

4. Procédé selon l'une des revendications précédentes, **caractérisé en ce que** la conductivité de l'aérosol est mesurée dans un canal traversé par l'aérosol et dans lequel sont situées une électrode de mesure isolée par rapport au canal conducteur de courant et une électrode d'amenée de tension également isolée du canal conducteur de courant, une tension constante étant appliquée sur l'électrode d'amenée de tension, l'électrode de mesure étant raccordée à un appareil de mesure de courant, et **en ce que** la mesure de la conductivité de l'aérosol est réalisée en divisant le courant mesuré par la tension appliquée.

5. Procédé selon l'une des revendications 1 à 3,
**caractérisé en ce que** la conductivité de l'aérosol est mesurée dans un canal traversé par l'aérosol et dans lequel sont situées une électrode de mesure isolée du canal conducteur de courant et une électrode d'amenée de tension également isolée du canal conducteur de courant, une tension alternative étant appliquée sur l'électrode d'amenée de courant, l'électrode de mesure étant raccordée à un appareil de mesure de courant qui mesure la fraction du courant qui est en phase avec la tension alternative, et **en ce qu'**une mesure de la conductivité de l'aérosol est déterminée en divisant cette fraction par la valeur de la tension alternative appliquée.

6. Procédé selon l'une des revendications 1 à 3,
**caractérisé en ce que** la conductivité de l'aérosol est mesurée dans un canal traversé par l'aérosol et dans lequel sont situées une électrode de mesure isolée du canal conducteur de courant et une électrode d'amenée de tension également isolée du canal d'amenée de courant, l'électrode d'amenée de courant étant raccordée à une tension électrique qui varie périodiquement, **en ce que** la totalité du courant d'aérosol est mesurée en aval de l'électrode d'amenée de courant, **en ce que** l'amplitude et la valeur moyenne de la fraction du courant électrique mesurée par l'électromètre d'aérosol et qui a pour fréquence la fréquence ou le double de la fréquence de la tension alternative produite par ladite source de tension alternative sont déterminées et **en ce que** la conductivité de l'aérosol est mesurée en divisant la valeur de la fraction mesurée par la valeur de l'amplitude de la tension appliquée.

7. Procédé selon la revendication 6, **caractérisé en ce que** la tension qui varie périodiquement est une tension alternative largement exempte d'une valeur moyenne, **en ce que** pour la détermination de l'amplitude de courant, on utilise un amplificateur à verrouillage et **en ce que** la fréquence du signal de référence de l'amplificateur à verrouillage est le double de celle de la tension alternative appliquée.

8. Procédé selon la revendication 6, **caractérisé en ce que** la tension qui varie périodiquement oscille essentiellement entre 0 V et la valeur de l'amplitude, **en ce que** pour la détermination de l'amplitude de courant, on utilise un amplificateur à verrouillage de phase et **en ce que** la fréquence du signal de référence de l'amplificateur de verrouillage de phase est la fréquence de la tension alternative appliquée.

9. Procédé selon l'une des revendications 1 à 3,
**caractérisé en ce que** la conductivité de l'aérosol est mesurée dans un canal traversé par l'aérosol et dans lequel sont situées une électrode de mesure isolée du canal conducteur de courant et une électrode d'amenée de tension également isolée du canal conducteur de courant, l'électrode d'amenée de tension étant raccordée à une tension électrique qui varie périodiquement, **en ce qu'**en aval de l'électrode d'amenée de tension est située une électrode sur laquelle la modification du courant de particules d'aérosol chargées a pour effet un courant d'influence dont l'amplitude et la valeur moyenne sont mesurées et **en ce que** la conductivité de l'aérosol est mesurée en divisant la valeur de l'amplitude mesurée par la valeur de l'amplitude de la tension appliquée.

**EP 1 655 595 B1**

10. Procédé selon la revendication 9, **caractérisé en ce que** la tension qui varie périodiquement est une tension alternative largement sans valeur moyenne, **en ce que** pour la détermination de l'amplitude de courant on utilise un amplificateur à verrouillage de phase et **en ce que** la fréquence du signal de référence de l'amplificateur à verrouillage de phase est le double de la fréquence de la tension alternative appliquée.

11. Procédé selon la revendication 9, **caractérisé en ce que** la tension qui varie périodiquement oscille essentiellement entre 0 V et la valeur de l'amplitude, **en ce que** pour la détermination de l'amplitude de courant on utilise un amplificateur à verrouillage de phase et **en ce que** la fréquence du signal de référence de l'amplificateur à verrouillage de phase est la fréquence de la tension alternative appliquée.

12. Procédé selon l'une des revendications précédentes, **caractérisé en ce que** la mesure de la conductivité est réalisée en recourant à deux électrodes séparées par un espace traversé par l'aérosol, **en ce qu'**en plus de la conductivité électrique, on mesure le courant global de l'aérosol chargé après qu'il a traversé l'espace intermédiaire et **en ce que** le diamètre moyen des particules est déterminé à partir de ce courant global et de la concentration en nombre.

13. Procédé selon l'une des revendications précédentes, **caractérisé en ce que** la mesure de la conductivité est effectuée en recourant à deux électrodes séparées par un espace traversé par l'aérosol, **en ce qu'**en plus de la conductivité électrique, on mesure le courant total de l'aérosol chargé après qu'il a traversé l'espace intermédiaire et **en ce que** la tension ou l'amplitude de tension nécessaires pour mesurer la conductivité sont régulées de telle sorte que le rapport entre le courant global et la conductivité reste constant.

14. Procédé selon l'une des revendications 1 à 12,
**caractérisé en ce que** la mesure de la conductivité est réalisée en recourant à deux électrodes séparées par un espace traversé par l'aérosol, **en ce qu'**en plus de la conductivité électrique, on mesure le courant total de l'aérosol chargé après qu'il a traversé l'espace intermédiaire et **en ce que** l'efficacité du chargeur est régulée de telle sorte que le produit du rapport entre le courant total des particules chargées et la conductivité par l'efficacité du chargeur reste constant ou **en ce que** le rapport entre le courant et la concentration en nombre reste constant.

15. Dispositif de mesure de la concentration en nombre et/ou du diamètre moyen de particules d'un aérosol, qui présente :

un système d'amenée de gaz doté de moyens de transport qui transportent un aérosol,
un chargeur à diffusion et une sonde de conductivité qui sont disposés de telle sorte que l'aérosol transporté par les moyens de transport traverse le chargeur à diffusion et la sonde de conductivité, l'aérosol contenant des particules chargées dans la zone occupée par la sonde de conductivité,
ainsi que des moyens d'évaluation qui déterminent la concentration en nombre à partir de la conductivité mesurée par la sonde de conductivité,
le dispositif étant en mesure d'exécuter le procédé selon l'une des revendications qui précèdent.

16. Dispositif selon la revendication 15, **caractérisé en ce que** la sonde de conductivité présente un électromètre d'aérosol qui détermine le courant global, l'électromètre d'aérosol étant disposé en aval d'une paire d'électrodes séparées par un espace traversé par l'aérosol, ou **en ce que** le dispositif présente en plus de la sonde de conductivité un électromètre à aérosol raccordé en aval de cette sonde.

**12**

Fig. 1

Fig. 2

Fig. 3

Fig. 4

51  52

2

1

54

55

Fig. 5

62

61

63

2

1

64

Fig. 6

Fig. 7

Fig. 8

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 19824744 A1
- DE 19824744
- US 3526828 A
- US 5214386 A

### In der Beschreibung aufgeführte Nicht-Patentliteratur

- Aerosol Measurement, Principles, Techniques and Applications. Wiley, 2001
- **Baltensperger, U. ; E. Weingartner ; H. Burtscher ; J. Keskinen.** Aerosol Measurement, Principles, Techniques and Applications. Wiley, 2001, 387-418
- **P. Büscher ; A. Schmidt-Ott ; A. Wiedensohler.** *Journal of Aerosol Science,* 1994, vol. 25, 651-663
- **M. Adachi ; Y. Kousaka ; K. Okuyama.** *J. Aerosol Sci,* 1985, vol. 16, 109